# EUROPEAN PATENT APPLICATION

(11) **EP 4 513 054 A1**
(43) Date of publication of application: **26.02.2025**
(21) Application number: 23791500.4
(22) Date of filing: 09.02.2023
(51) Int. Cl.: F16F 13/10

(54) **ANTIVIBRATION DEVICE**

(30) Priority: 21.04.2022 JP 2022070382
(71) Applicant: Prospira Corporation, Kawasaki, Kanagawa 212-0013 (JP)
(72) Inventor: TAKAKURA Tomoki, Kawasaki city, Kanagawa 212-0013 (JP)
(74) Representative: Scott, Stephen John
(86) International application number: PCT/JP2023/004437
(87) International publication number: WO 2023/203844

(57) **Abstract**

An anti-vibration device (1) includes a tubular first attachment member (11) configured to be connected to one of a vibration generating portion and a vibration receiving portion, a second attachment member (12) configured to be connected to the other, an elastic body (13) connecting the first attachment member and the second attachment member, and a separating member (16) separating, in the axial direction along the central axis (O) of the first attachment member, a liquid chamber (19) inside the first attachment member into a first liquid chamber (14) having the elastic body as a part of a dividing wall and a second liquid chamber (15), the separating member having formed therein an orifice passage (17) connecting the first liquid chamber and the second liquid chamber. A deformable shielding body (21) connecting the first attachment member and the second attachment member and covering the elastic body from the side opposite the first liquid chamber along the axial direction is provided. A shielding chamber (22) is defined by being sandwiched in the axial direction by the shielding body and the elastic body and is cut off from the liquid chamber.

## Description

### CROSS-REFERENCE TO RELATED APPLICATION

The present application claims priority to Japanese Patent Application No. 2022-070382 filed on April 21, 2022, the entire contents of which are incorporated herein by reference.

### TECHNICAL FIELD

The present disclosure relates to an anti-vibration device.

### BACKGROUND

A conventionally known configuration for an anti-vibration device, for example as disclosed in JP 2021-116920 A (Patent Literature 1), includes a tubular first attachment member configured to be connected to one of a vibration generating portion and a vibration receiving portion, a second attachment member configured to be connected to the other, an elastic body connecting the first attachment member and the second attachment member, and a separating member configured to separate, in an axial direction along a central axis of the first attachment member, a liquid chamber inside the first attachment member into a first liquid chamber having the elastic body as a part of the dividing wall and a second liquid chamber. An orifice passage that connects the first liquid chamber and the second liquid chamber is formed in the separating member. When vibration is input to this anti-vibration device, the first attachment member and the second attachment member are relatively displaced while elastically deforming the elastic body, causing the fluid pressure in the first liquid chamber to fluctuate and liquid to circulate through the orifice passage, thereby damping and absorbing vibration.

### CITATION LIST

### Patent Literature

PTL 1: JP 2021-116920 A

### SUMMARY

### (Technical Problem)

However, in the aforementioned conventional anti-vibration device, the relative axial positions of the first attachment member and the second attachment member may change over time due to oxidation of the elastic body when the anti-vibration device is placed under high temperatures, resulting in a failure to achieve the desired anti-vibration performance.

The present disclosure has been conceived in light of such circumstances and aims to provide an anti-vibration device that can suppress oxidation of the elastic body.

### (Solution to Problem)

To resolve the aforementioned problem and achieve this aim, an anti-vibration device of the present disclosure is an anti-vibration device including a tubular first attachment member configured to be connected to one of a vibration generating portion and a vibration receiving portion and a second attachment member configured to be connected to the other, an elastic body connecting the first attachment member and the second attachment member, and a separating member configured to separate, in an axial direction along a central axis of the first attachment member, a liquid chamber inside the first attachment member into a first liquid chamber having the elastic body as a part of a dividing wall and a second liquid chamber, the separating member having formed therein an orifice passage connecting the first liquid chamber and the second liquid chamber, wherein a deformable shielding body connecting the first attachment member and the second attachment member and covering the elastic body from a side opposite the first liquid chamber along the axial direction is provided, and a shielding chamber is defined by being sandwiched in the axial direction by the shielding body and the elastic body and is cut off from the liquid chamber.

The deformable shielding body connecting the first attachment member and the second attachment member and covering the elastic body from the side opposite the first liquid chamber along the axial direction is provided. The shielding chamber defined by being sandwiched in the axial direction by the shielding body and the elastic body can therefore prevent the elastic body from being exposed to outside air and can suppress oxidation of the elastic body.

Since the shielding chamber is cut off from the liquid chamber, changes in anti-vibration performance can be prevented by provision of the shielding chamber, and this configuration can easily be applied to an existing anti-vibration device, for example.

An internal volume of the shielding chamber may be smaller than an internal volume of the first liquid chamber and the second liquid chamber respectively.

By the internal volume of the shielding chamber being smaller than the internal volume of the first liquid chamber and the second liquid chamber respectively, provision of the shielding chamber can suppress the bulkiness of the anti-vibration device in the axial direction.

The shielding body may be integrally formed from the same material as the elastic body.

By the shielding body being integrally formed from the same material as the elastic body, the anti-vibration device can be easily formed, and the shielding body can be smoothly deformed by the relative displacement of the first attachment member and the second attachment member.

The shielding chamber may be filled with the same liquid as the liquid filling the liquid chamber.

By the shielding chamber being filled with the same liquid as the liquid filling the liquid chamber, the anti-vibration device can be formed easily.

### (Advantageous Effect)

According to the present disclosure, oxidation of the elastic body can be suppressed.

### BRIEF DESCRIPTION OF THE DRAWINGS

In the accompanying drawings:

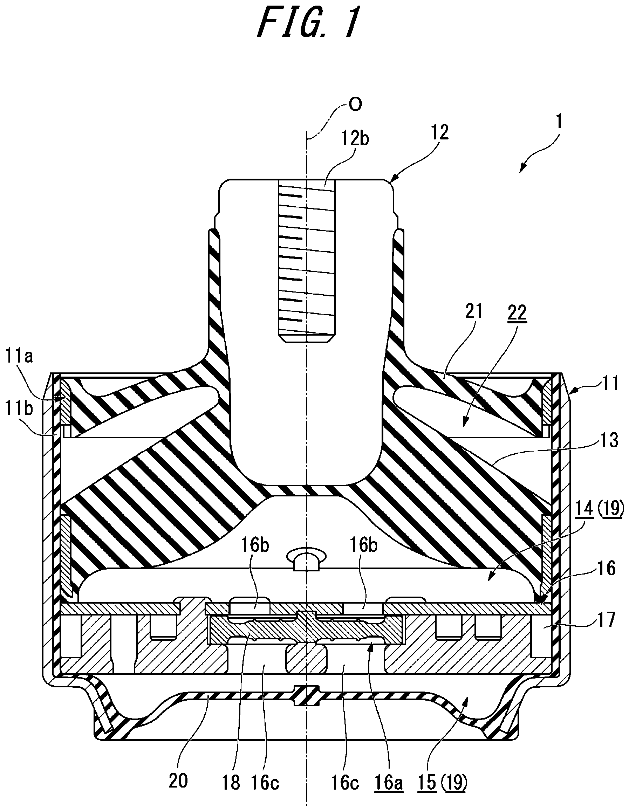

FIG. 1 is a vertical cross-sectional view of an anti-vibration device illustrated as an embodiment.

### DETAILED DESCRIPTION

An embodiment of an anti-vibration device according to the present disclosure is described below with reference to FIG. 1.

An anti-vibration device 1 is a liquid-filled anti-vibration device including a tubular first attachment member 11 configured to be connected to one of a vibration generating portion and a vibration receiving portion, a second attachment member 12 configured to be connected to the other, an elastic body 13 connecting the first attachment member 11 and the second attachment member 12, and a separating member 16 separating the inside of the first attachment member into a main liquid chamber (first liquid chamber) 14 and an auxiliary liquid chamber (second liquid chamber) 15, described below.

In a case in which the anti-vibration device 1 is installed in an automobile, for example, the second attachment member 12 is connected to the engine, which acts as the vibration generating portion, and the first attachment member 11 is connected to the vehicle body, which acts as the vibration receiving portion. This suppresses the transmission of engine vibration to the vehicle body.

Hereinafter, the direction along the central axis O of the first attachment member 11 is referred to as the axial direction. The second attachment member 12 side along the axial direction is referred to as the upper side, and the separating member 16 side is referred to as the lower side. In a plan view of the anti-vibration device 1 from the axial direction, the direction intersecting the central axis O is referred to as the radial direction, and the direction about the central axis O is referred to as the circumferential direction.

The first attachment member 11, the second attachment member 12, and the elastic body 13 are formed to be circular or annular in plan view and are arranged coaxially with the central axis O.

The second attachment member 12 is formed as a column extending in the axial direction. The second attachment member 12 is provided on the inside of the first attachment member 11 in the radial direction. A screw hole 12b extending downward from the upper end face of the second attachment member 12 is formed in the second attachment member 12, and a bolt (not illustrated), which serves as an attachment fixture on the engine side, is screwed into the screw hole 12b.

The elastic body 13 is formed from a rubber material and is connected to the inner circumferential surface of the first attachment member 11 and the outer circumferential surface of the second attachment member 12, respectively. The elastic body 13 may be formed from a synthetic resin material, for example. The elastic body 13 is formed in a cylindrical shape extending downward from the inner side in the radial direction toward the outer side.

In the illustrated example, a fitting cylinder 11a is fitted inside the first attachment member 11, and the elastic body 13 is vulcanization bonded to the inner circumferential surface of the fitting cylinder 11a and the outer circumferential surface of the second attachment member 12, respectively.

A rubber membrane 11b is vulcanization bonded to the entire inner circumferential surface of the first attachment member 11. The portion of the interior of the first attachment member 11 that is located below the elastic body 13 is a liquid chamber 19. The separating member 16 and a diaphragm 20 are provided, in this order from top to bottom, in a portion of the interior of the first attachment member 11 located below the elastic body 13.

The diaphragm 20 is made of an elastic material such as rubber or soft resin and is formed in a bottomed cylindrical shape. The diaphragm 20 is vulcanization bonded to the first attachment member 11. The diaphragm 20 is formed integrally with the rubber membrane 11b. The diaphragm 20 closes off the lower end opening of the first attachment member 11. In the illustrated example, the bottom of the diaphragm 20 is shaped to be deep at the periphery and shallow in the center. The shape of the diaphragm 20 may be changed as needed.

The portion of the interior of the first attachment member 11 that is axially sandwiched between the diaphragm 20 and the elastic body 13 is the liquid chamber 19. The liquid chamber 19 is a sealed space that is enclosed in a liquid-tight manner by the elastic body 13 and the diaphragm 20. The liquid chamber 19 is filled (sealed by) a liquid.

The liquid chamber 19 is separated in the axial direction by the separating member 16 into the main liquid chamber 14, which has the elastic body 13 as part of the dividing wall, and the auxiliary liquid chamber 15, which has the diaphragm 20 as part of the dividing wall.

The main liquid chamber 14 is a space enclosed by the elastic body 13 and the separating member 16, and the internal volume thereof changes due to deformation of the elastic body 13. The auxiliary liquid chamber 15 is a space enclosed by the diaphragm 20 and the separating member 16, and the internal volume thereof changes due to deformation of the diaphragm 20. The anti-vibration device 1 with this configuration is a compression-type device used by being installed so that the main liquid chamber 14 is positioned vertically upward and the auxiliary liquid chamber 15 is positioned vertically downward.

The separating member 16 is formed in the shape of a disk and is fitted inside the first attachment member 11.

An orifice passage 17 that connects the main liquid chamber 14 and the auxiliary liquid chamber 15 is formed in the separating member 16. The orifice passage 17 extends in the circumferential direction.

The separating member 16 has formed therein a housing chamber 16a that houses a plate-shaped membrane 18 formed from a rubber material. The housing chamber 16a is provided in the central portion of the separating member 16 in the radial direction. The separating member 16 has formed therein first connecting holes 16b that connect the housing chamber 16a and the main liquid chamber 14 to each other and second connecting holes 16c that connect the housing chamber 16a and the auxiliary liquid chamber 15 to each other. The first connecting holes 16b and the second connecting holes 16c extend in the axial direction. A plurality of each of the first connecting holes 16b and the second connecting holes 16c is provided.

When vibration is input to the anti-vibration device 1 with this configuration, the first attachment member 11 and the second attachment member 12 are relatively displaced while elastically deforming the elastic body 13. The liquid in the liquid chamber 19 then circulates between the main liquid chamber 14 and the auxiliary liquid chamber 15 through the orifice passage 17, and the membrane 18 is deformed or displaced in the housing chamber 16a to cause the liquid in the liquid chamber 19 to circulate between the main liquid chamber 14 and the auxiliary liquid chamber 15 through the housing chamber 16a, the first connecting holes 16b, and the second connecting holes 16c.

In the present embodiment, a deformable shielding body 21 connecting the inner circumferential surface of the first attachment member 11 and the outer circumferential surface of the second attachment member 12 and covering the elastic body 13 from above (the side opposite the first liquid chamber along the axial direction) is provided.

The shielding body 21 is located at a distance upward from the outer circumferential surface of the elastic body 13. The shielding body 21 is vulcanization bonded to the inner circumferential surface of the fitting cylinder 11a and the outer circumferential surface of the second attachment member 12, respectively. The shielding body 21 is integrally formed from the same material as the elastic body 13. The shielding body 21 is formed in the shape of an annular plate. The shielding body 21 is coaxially arranged with the central axis O. The shielding body 21 extends downward from the inner side in the radial direction toward the outer side. The volume of the shielding body 21 is smaller than the volume of the elastic body 13. The thickness of the shielding body 21 is less than the thickness of the elastic body 13.

The shielding body 21 may be formed from a material other than a rubber material and may also be bellows-shaped, for example.

A shielding chamber 22, defined by being sandwiched in the axial direction by the shielding body 21 and the elastic body 13, is cut off from the liquid chamber 19. The shielding chamber 22 is an independent sealed space that is not connected to the liquid chamber 19. The shielding chamber 22 is formed in an annular shape and is arranged coaxially with the central axis O. The internal volume of the shielding chamber 22 is smaller than the internal volume of the main liquid chamber 14 and the auxiliary liquid chamber 15, respectively. The shielding chamber 22 may be filled with the same liquid as the liquid filling the liquid chamber 19.

The shielding chamber 22 may be filled with a different liquid or gas than the liquid filling the liquid chamber 19.

As described above, the deformable shielding body 21 connecting the first attachment member 11 and the second attachment member 12 and covering the elastic body 13 from above is provided in the anti-vibration device 1 according to the present embodiment. The shielding chamber 22, defined by being sandwiched in the axial direction by the shielding body 21 and the elastic body 13, can therefore prevent the elastic body 13 from being exposed to outside air and can suppress oxidation of the elastic body 13.

Since the shielding chamber 22 is cut off from the liquid chamber 19, changes in anti-vibration performance can be suppressed by provision of the shielding chamber 22, and this configuration can easily be applied to an existing anti-vibration device, for example.

By the internal volume of the shielding chamber 22 being smaller than the internal volume of the main liquid chamber 14 and the auxiliary liquid chamber 15 respectively, provision of the shielding chamber 22 can suppress the bulkiness of the anti-vibration device 1 in the axial direction.

By the shielding body 21 being integrally formed from the same material as the elastic body 13, the anti-vibration device 1 can be easily formed and the shielding body 21 can deform smoothly with the relative displacement of the first attachment member 11 and the second attachment member 12.

By the shielding chamber 22 being filled with the same liquid as the liquid filling the liquid chamber 19, the anti-vibration device 1 can be formed easily.

The technical scope of the present disclosure is not limited to the aforementioned embodiments, and various changes can be made without departing from the spirit of the present disclosure.

For example, in the above embodiment, the compression-type anti-vibration device 1 in which positive pressure acts on the main liquid chamber 14 in response to action of a support load has been described, but the present disclosure can also be applied to a suspension-type anti-vibration device attached so that the main liquid chamber 14 is positioned vertically below and the auxiliary liquid chamber 15 is positioned vertically above, with negative pressure acting on the main liquid chamber 14 when a support load acts thereon.

In the above embodiment, the separating member 16 divides the liquid chamber 19 in the first attachment member 11 into the main liquid chamber 14, which has the elastic body 13 as part of the dividing wall, and the auxiliary liquid chamber 15, but this configuration is not limiting.

For example, instead of providing the diaphragm 20, an elastic body may be provided, and instead of providing the auxiliary liquid chamber 15, a pressure-receiving liquid chamber having this elastic body as part of the dividing wall may be provided. For example, the separating member 16 divides the liquid chamber 19 in the first attachment member 11 into a first liquid chamber 14 and a second liquid chamber 15, and at least one of the first liquid chamber 14 and the second liquid chamber 15 can be changed to another configuration as necessary with the elastic body 13 as part of the dividing wall.

The anti-vibration device 1 is not limited to the engine mount of a vehicle but can also be applied to other types of mounts besides engine mounts. For example, the anti-vibration device 1 can also be applied to the mount of a generator installed in construction machinery or to the mount of a machine installed in a location such as a factory.

Other components in the aforementioned embodiments may be replaced with well-known components without departing from the spirit of the present disclosure, and the aforementioned variations may be combined as appropriate.

Aspects of the present disclosure include the following, for example.
<1> An anti-vibration device comprising:
   a tubular first attachment member configured to be connected to one of a vibration generating portion and a vibration receiving portion and a second attachment member configured to be connected to the other;
   an elastic body connecting the first attachment member and the second attachment member; and
   a separating member configured to separate, in an axial direction along a central axis of the first attachment member, a liquid chamber inside the first attachment member into a first liquid chamber having the elastic body as a part of a dividing wall and a second liquid chamber, the separating member having formed therein an orifice passage connecting the first liquid chamber and the second liquid chamber, wherein
   a deformable shielding body connecting the first attachment member and the second attachment member and covering the elastic body from a side opposite the first liquid chamber along the axial direction is provided, and
   a shielding chamber is defined by being sandwiched in the axial direction by the shielding body and the elastic body and is cut off from the liquid chamber.
<2> The anti-vibration device according to <1>, wherein an internal volume of the shielding chamber is smaller than an internal volume of the first liquid chamber and the second liquid chamber respectively.
<3> The anti-vibration device according to <1> or <2>, wherein the shielding body is integrally formed from a same material as the elastic body.
<4> The anti-vibration device according to any one of <1> to <3>, wherein the shielding chamber is filled with a same liquid as a liquid filling the liquid chamber.

### REFERENCE SIGNS LIST

- 1: Anti-vibration device
- 11: First attachment member
- 12: Second attachment member
- 13: Elastic body
- 14: Main liquid chamber (first liquid chamber)
- 15: Auxiliary liquid chamber (second liquid chamber)
- 16: Separating member
- 17: Orifice passage
- 19: Liquid chamber
- 21: Shielding body
- 22: Shielding chamber
- O: Central axis

## Claims

1. An anti-vibration device comprising:
a tubular first attachment member configured to be connected to one of a vibration generating portion and a vibration receiving portion and a second attachment member configured to be connected to the other;
an elastic body connecting the first attachment member and the second attachment member; and
a separating member configured to separate, in an axial direction along a central axis of the first attachment member, a liquid chamber inside the first attachment member into a first liquid chamber having the elastic body as a part of a dividing wall and a second liquid chamber, the separating member having formed therein an orifice passage connecting the first liquid chamber and the second liquid chamber, wherein
a deformable shielding body connecting the first attachment member and the second attachment member and covering the elastic body from a side opposite the first liquid chamber along the axial direction is provided, and
a shielding chamber is defined by being sandwiched in the axial direction by the shielding body and the elastic body and is cut off from the liquid chamber.

2. The anti-vibration device according to claim 1, wherein an internal volume of the shielding chamber is smaller than an internal volume of the first liquid chamber and the second liquid chamber respectively.

3. The anti-vibration device according to claim 1 or 2, wherein the shielding body is integrally formed from a same material as the elastic body.

4. The anti-vibration device according to claim 1 or 2, wherein the shielding chamber is filled with a same liquid as a liquid filling the liquid chamber.
